# EUROPEAN PATENT SPECIFICATION

(11) **EP 0 770 637 B1**
(45) Date of publication and mention of the grant of the patent: **11.09.2002**
(21) Application number: 96307387.9
(22) Date of filing: 10.10.1996
(51) Int. Cl.: C08G 65/40, C08L 71/12

(54) **Process for making a polyphenylene ether resin molding material for lamp reflectors**
Verfahren zur Herstellung einer Polyphenylenetherharz-Formmasse für Lampenreflektoren
Procédé pour la préparation d'une masse à mouler à la base de polyphénylène éther pour des réflecteurs pour lampes

(30) Priority: 26.10.1995 JP 30051095
(43) Date of publication of application: 02.05.1997
(73) Proprietor: GENERAL ELECTRIC COMPANY, Schenectady, NY 12345 (US)
(72) Inventor: Inoue, Kazushige, Moka-city, Tochigi Prefecture (JP)
(74) Representative: Szary, Anne Catherine, Dr.

(56) References cited:
- EP-A- 0 400 506
- DATABASE WPI Section Ch, Week 9403 Derwent Publications Ltd., London, GB; Class A25, AN 94-018612 XP002022921 & JP 05 320 495 A (ASAHI CHEM IND) , 3 December 1993
- "Encyclopedia of Polymer Science and Engineering" 1988 , WILEY INTERSCIENCE , NEW YORK XP002022919 Vol. 13 * page 7 *
- J. BRANDRUP ET AL.: "Polymer Handbook" 1989 , WILEY-INTERSCIENCE , NEW YORK XP002022920 * page VII-389 *

## Description

The present invention concerns a process for making a polyphenylene ether resin (sometimes abbreviated as PPE hereinbelow) material for molding lamp reflectors.

In recent years, the automobile industry has investigated replacing conventional glass lamp reflectors with lamp reflectors made of thermosetting or thermoplastic resins reinforced with glass fibers in an attempt to vary the design of automobile front ends and reduce vehicle weight. Thermosetting resins have excellent heat resistance, rigidity, dimensional stability, and the like, but they are difficult to work with because they also require a relatively long molding cycle and they require finishing processes such as the removal of burrs growing during molding. Since thermosetting resins have such drawbacks, crystalline thermosetting resin compositions reinforced with various inorganic reinforcing agents have been proposed. Such reinforced crystalline thermosetting resins have improved heat resistance. dimensional stability, and mechanical properties, but the surface of the moldings is marred by the inorganic reinforcing agents, and a primer must be applied to obtain a sufficient degree of beam/sharpness.

It has also been proposed to use polyphenylene ether, a noncrystalline resin with excellent heat resistance, not containing inorganic reinforcing agents (Japanese Unexamined Patent Application Kokai No. Hei 5-320495). However, polyphenylene ether resins not containing inorganic reinforcing do not provide a sufficient level of beam sharpness agents without the use of a primer,

The object of the present invention is to provide a process for making a resin molding material for lamp reflectors with excellent heat resistance, beam sharpness, and mechanical properties.

The inventors studied the fact that a sufficient degree of beam sharpness cannot be obtained using PPE resins that do not contain inorganic reinforcing agents. As a result, they found that although PPE resins have excellent heat resistance, they have poor flowability, and when they are prepared for molding by melt-kneading, heat generated by shearing forces gives rise to adulterants such as carbides and gels in the molding material that compromise beam sharpness. They then discovered that molding materials suitable for lamp reflectors can be obtained by keeping the amount of these adulterants below a specified level, leading to the present invention.

Thus, the present invention provides a process for making a polyphenylene ether resin molding material for lamp reflectors wherein the molding material contains 80 to 100 percent by weight of polyphenylene ether as the resin component and has a heat deflection temperature of at least 160°C, and this resin component, when dissolved in chloroform, leaves a residue of no more than 0.05 percent by weight when passed through a 325 mesh screen, the process comprising maintaining a resin containing 80-100% by weight of polyphenylene ether at a temperature of no more than 360°C while melt kneading at a specific energy of at least 0.5 kwh/kg.

Conventional PPE resins can be used. PPE resin is a generic term for polymers described by, for example, general formula (I) 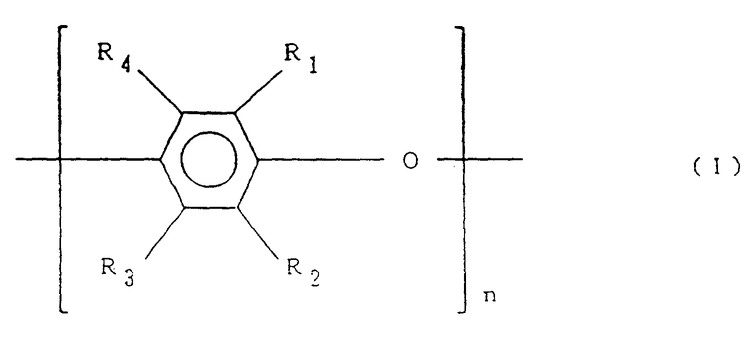 (where each *R*₁*, R*₂*, R*₃, and *R*₄ is independently a monovalent substituent group selected from a hydrogen atom, halogen atom, alkyl group, alkoxy group, or haloalkyl groups or haloalkoxy groups which have at least two carbon atoms between the halogen atom and the phenol ring and do not contain a tertiary α-carbon atom).
Polymers described by the general formula hereinabove may be used as homopolymers or copolymers of two or more of these resins. Specifically, it is preferred that *R*₁ and *R*₂ be alkyl groups with one to four carbon atoms and *R*₃ and *R*_{*4*} be hydrogen atoms or alkyl groups with one to four carbon atoms. Examples include poly(2,6-dimethyl-1,4-phenylene) ether, poly(2,6-diethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether, and poly(2-ethyl-6-propyl-1,4-phenylene) ether. Examples of PPE copolymers include copolymers containing some amount of an alkyl-3-substituted phenol, for example, 2,3,6-trimethylphenol, in the polyphenylene ether repeating unit. Copolymers of these PPEs with grafted styrene compounds may also be used. Copolymers obtained by graft-polymerizing a styrene compound such as styrene, α-methylstyrene, vinyltoluene, or chlorostyrene to the above-described PPE may be used as the styrene-grafted polyphenylene ether.

In the process of the present invention, the resin component of the molding material must contain 80 to 100 percent by weight of the above-described PPE resin. If there is less than 80 percent by weight of PPE resin, molding material with a heat deflection temperature of at least 160°C cannot be obtained, and the resultant resins are unsuitable as lamp reflectors.

The resin molding material for lamp reflectors prepared by the process of the invention has a heat deflection temperature of at least 160°C, preferably at least 165°C. What is meant here by heat deflection temperature is the temperature at which thermal deformation occurs under a load of 18.6 kg/cm² measured in accordance with ASTM D648. If the heat deflection temperature is less than 160°C, sufficient heat resistance for lamp reflectors is not obtained, risking misalignment of the optical axis or [reflector] deformation when heated by the burning lamp. As stated hereinabove, PPE resin must comprise at least 80 percent by weight of the resin component in order to achieve a heat deflection temperature of at least 160°C.

When the resin component of the molding material for lamp reflectors prepared by the process of the invention is dissolved in chloroform, it must leave a residue of no more than 0.05 percent by weight when passed through a 325 mesh screen. To determine if the resin component leaves a residue of more than 0.05 percent by weight when passed through a 325 mesh screen, add 1 part by weight of it to at least 10 parts by weight of chloroform and dissolve it by shaking at 25°C for 6 to 10 h. What is meant by residue left on a 325 mesh screen is the percentage by weight of the total resin component left on the screen (i.e., the residue). If more than 0.05 percent by weight of residue is left on a 325 mesh screen, the quality of the moldings surface is not sufficient for lamp reflectors and primer must be applied. One means for obtaining less than 0.05 percent by weight of residue on a 325 mesh screen is to melt-knead the resin component under conditions in which the heat generated by shearing forces is controlled: namely, to maintain the resin component at a temperature of 360°C or less while it is melt-kneaded at a specific energy of at least 0.5 kwh/kg. It is more preferable to maintain the resin component at a temperature of 350°C or less while it is melt-kneaded at a specific energy of at least 0.5 kwh/kg. What is meant here by specific energy is the mechanical energy applied to the melt-kneaded material per unit mass, a quantity that is generally determined from the output of the motor and the extrusion rate and expressed as kwh/kg. Melt-kneading under conditions such as those described hereinabove controls heat generated by shearing forces, thereby controlling the production of gel components and carbides by oxidation and excess heating. It is also preferred to add various aids such as lubricants and stabilizers to the resin component when melt-kneading it. An example of a second means for obtaining the desired residue levels is to remove co-mixed adulterants or gels and carbides produced in processing by filtering the resin component in a molten state, for example, running the resin component through a filter medium such as mesh or sintered metal in the final stage of melt-kneading. When melt-kneading with an extruder, this can be done by, for example, providing a mesh on the die head. There are no particular restrictions on the size of the mesh, and, as mentioned hereinabove, the resin component should leave a residue of no more than 0.05 percent by weight on a 325 mesh screen when dissolved in chloroform.

In the process of the present invention, the resin component may also contain polystyrene (PS) resin. Although polystyrene resins are known in the art, in the present invention the polymer must contain, in amounts of at least 25 percent by weight, a repeating structural unit derived from an aromatic vinyl compound described by general formula (II): 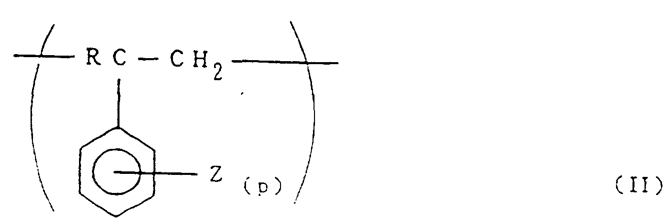 (where *R* is a hydrogen atom or an alkyl group with one to four carbon atoms, *Z* denotes a halogen atom or an alkyl substituent with one to four carbon atoms, and *p* is an integer ranging from 0 to 5).
Examples of such styrenic polymers include homopolymers and copolymers of styrene and styrene derivatives such as *p*-methylstyrene, α-methylstyrene, α-methyl-*p*-methylstyrene, chlorostyrene, and bromostyrene. In addition, rubber-modified polystyrene (HIPS), comprising 70 to 99 percent by weight of the above-described aromatic vinyl compound and 1 to 30 percent by weight of a diene rubber, may be used. Examples of diene rubbers comprising the HIPS include homopolymers of conjugated diene compounds such as butadiene, isoprene, and chloroprene; copolymers of conjugated diene compounds and unsaturated nitrile compounds or aromatic vinyl compounds; and natural rubber. These materials may be used singly or in combinations of two or more. Polybutadiene and copolymers of butadiene and styrene are especially preferred.

HIPS can be obtained by emulsion polymerization, suspension polymerization, bulk polymerization, solution polymerization, or a combination of these methods.

It is preferred that the resin component contain 0 to 20 percent by weight of polystyrene resin.

The resin component may also contain styrenic elastomers for improving impact resistance. Styrenic elastomers known in the art may be used, examples including styrene-butadiene block copolymers containing at least one segment each of polystyrene and polybutadiene; styrene-isoprene copolymers containing at least one segment each of styrene and isoprene; and copolymers such as those described hereinabove in which the unsaturated portion is selectively hydrogenated. It is preferred that these styrenic elastomers contain 15 to 60 percent by weight of polystyrene segments. If the polystyrene segment content is too low, compatibility with the PPE resin composition is diminished and sufficient impact resistance cannot be obtained. If, on the other hand, the content is too high, the pliancy imparted by the elastomer will be lost, and sufficient impact resistance will not be obtained. It is preferred to blend the styrenic elastomer in amounts of no more than 20 percent by weight of the entire resin composition.

Other polymer components may be copolymerized or blended into the resin component, provided that they amount to no more then 20 percent by weight of the entire resin composition. Examples of other copolymerizable or blendable polymer components include polyester, polyamide, polycarbonate, polysulfide, polyacrylate, polysulfone, polyetherketone, polyacrylonitrite, and polyolefine.

The molding material prepared by the process of the invention may contain other conventionally used additives in addition to the resin component. Examples include coloring agents (dyes and pigments), fillers (e.g., carbon black, silica, and titanium oxide), agents for imparting heat resistance, antioxidants, antiweathering agents, lubricants, parting agents, crystal-nucleating agents, plasticizers, flame retardants, flowability enhancers, and antistatic agents.

The molding material is prepared by melt-kneading the resin component and the desired additives. A small amount of solvent may be used in this process, but it is generally not necessary. Preferred examples of the manufacturing apparatus include extruders, Banbury mixers, rollers, and kneaders, which may be run in a batchwise or continuous process.

### Examples

The present invention is described in further detail hereinbelow by means of working examples, but the invention is not limited by these examples.

The following compounds were used in the working examples.

Polyphenylene ether resin (PPE): Poly(2,6-dimethyl-1,4-phenylene) ether with an intrinsic viscosity of 0.46 dL/g (chloroform, 25°C), made by G.E. Plastics Japan, Ltd.

Polystyrene (PS): Trade name Dick Styrene HF-11, made by Dainippon Ink Kagaku Kogyo K.K.

Hydrogenated styrene-isoprene copolymer (SIS): Trade name Septon 8006, made by K.K. Kurare.

Low-density polyethylene (PE): Melt index (MI) 20 g/10 min, PES-20, made by Nihon Unika (K.K.).

### Examples 1-2 and Comparative Examples 1-3

The components in Table 1 were blended in the proportions shown (by weight), the blend was pelletized by melt-kneading in a 50 mm twin screw extruder (temperature setting 300°C) under the conditions shown in Table 1 to obtain the resin composition (molding material). Test specimens were made by injection-molding the pellets at 320°C and subjected to the following battery of measurements. The results are shown in Table 1.

The specimens were evaluated as follows.

### (1) Izod Impact Strength

Measured in accordance with ASTM D256, using notched specimens 3.2 mm thick.

### (2) Tensile strength

Measured in accordance with ASTM D638.

### (3) Elongation at Break

Measured in accordance with ASTM D638.

### (4) Flexural Modulus

Measured in accordance with ASTM D790.

### (5) Thermal deflection temperature.

Measured in accordance with ASTM D648.

### (6) Percent Left on 325 Mesh Screen

Approximately 3 g of the pellets obtained hereinabove were dissolved in 50 mL of chloroform at 25°C, and then filtered through a 325 mesh screen. The residue was washed thoroughly with chloroform and precisely measured, and its weight was expressed as a percentage of the total weight of the pellets.

### (7) Beam Sharpness

A vaporization process was used to deposit aluminum directly on moldings formed in molds that had been polished to a mirror finish, and beam sharpness was evaluated visually. ○ indicates good beam sharpness, Δ indicates some cloudiness, and × indicates a high degree of dispersion.

**Table 1**

| | Working Examples | | Comparative Examples | | |
|---|---|---|---|---|---|
| | 1 | 2 | 1 | 2 | 3 |
| Resin Component (Parts by Weight) | | | | | |
| PPE | 95 | 95 | 95 | 95 | 75 |
| PS | - | - | - | - | 20 |
| Hydrogenated SIS | 4 | 4 | 4 | 4 | 4 |
| PE | 1 | 1 | 1 | 1 | 1 |

| Melt-Kneading Conditions | | | | | |
|---|---|---|---|---|---|
| Resin temperature (°C) | 342 | 355 | 361 | 385 | 330 |
| Screw speed (rpm) | 100 | 200 | 300 | 300 | 100 |
| Extrusion rate (kg/h) | 40 | 40 | 40 | 130 | 40 |

| Evaluative Tests | | | | | |
|---|---|---|---|---|---|
| Izod impact strength (Kg·cm/cm) | 5.7 | 5.2 | 5 | 4.5 | 4 |
| Tensile strength (Kg/cm²) | 834 | 834 | 810 | 805 | 900 |
| Elongation at break (%) | 62 | 48 | 28 | 28 | 18 |
| Flexural modulus (Kg/cm²) | 23000 | 23000 | 23000 | 23000 | 25000 |
| Heat deflection temperature (°C) | 187 | 188 | 187 | 188 | 158 |
| Residue (percentage by weight left on 325 mesh) | 0.011 | 0.045 | 0.061 | 0.083 | 0.02 |
| Beam sharpness | ○ | ○ | Δ | × | ○ |

Comparative Examples 1 and 2, which left large percentages of residue on 325 mesh during melt-kneading, provided poor beam sharpness. They also had poor mechanical properties compared to the working examples. Comparative Example 3, which had a low proportion of PPE in the resin component, had poor heat resistance due to its low heat deflection temperature, low Izod impact strength, and low elongation at break.

It was found that lamp reflectors molded from the molding materials of Working Examples 1 and 2, hereinabove, have sufficient beam sharpness, heat resistance, and mechanical properties. Therefore, the resin mold material prepared by the process of the invention is suitable for using in lamp reflectors.

## Claims

1. A process for making a polyphenylene ether molding material having a heat deflection temperature of at least 160°C which material when dissolved in chloroform at 25°C in a concentration of no more than 10% by weight, leaves a residue of no more than 0.05 percent by weight when passed through a 325 mesh screen, comprising maintaining a resin containing 80-100% by weight of polyphenylene ether at a temperature of no more than 360°C while melt kneading at a specific energy of at least 0.5 kwh/kg.

2. A process according to claim 1, wherein the polyphenylene ether molding material contains 0 to 20 percent by weight of polystyrene.

3. A process according to claim 1 comprising filtering the resin in a molten state.

## Patentansprüche

1. Verfahren zum Herstellen eines Polyphenylenether-Formmaterials mit einer Wärmeverformungs-Temperatur von mindestens 160°C, wobei das Material, wenn es in Chloroform bei 26°C in einer Konzentration von nicht mehr als 10 Gew.-% gelöst wird, einen Rest von nicht mehr als 0,05 Gew.-% hinterlässt, wenn es durch ein 325 Maschen-Sieb hindurchgeht, umfassend das Halten eines Harzes, enthaltend 80 bis 100 Gew.-% Polyphenylenether bei einer Temperatur von nicht mehr als 360°C während eines Schmelzknetens bei einer spezifischen Energie von mindestens 0,5 kwh/kg.

2. Verfahren nach Anspruch 1, worin das Polyphenylenether-Formmaterial 0 bis 20 Gew.-% Polystyrol enthält.

3. Verfahren nach Anspruch 1, umfassend das Filtrieren des Harzes in einem geschmolzenen Zustand.

## Revendications

1. Procédé de préparation d'une matière pour moulage à base de poly(oxyde de phénylène), ayant une température de déformation à chaud d'au moins 160 °C, matière qui, lorsqu'elle est dissoute dans du chloroforme à 25 °C à une concentration ne dépassant pas 10 % en poids, laisse un résidu ne dépassant pas 0,05 % en poids par passage sur un tamis de 325 mesh, procédé qui comprend l'étape consistant à maintenir une résine contenant 80 à 100 % en poids de poly(oxyde de phénylène) à une température ne dépassant pas 360 °C tout en la malaxant à l'état fondu avec une énergie spécifique d'au moins 0,5 kwh/kg.

2. Procédé selon la revendication 1, dans lequel la matière pour moulage à base de poly(oxyde de phénylène) contient 0 à 20 % en poids de polystyrène.

3. Procédé selon la revendication 1, qui comprend la filtration de la résine à l'état fondu.
